# EUROPEAN PATENT SPECIFICATION

(11) **EP 1 998 141 B1**
(45) Date of publication and mention of the grant of the patent: **15.04.2015**
(21) Application number: 08009419.6
(22) Date of filing: 21.05.2008
(51) Int. Cl.: G01C 21/36

(54) **Navigation device, navigation method and navigation program**
Navigationsvorrichtung, Navigationsverfahren und Navigationsprogramm
Dispositif de navigation, procédé de navigation et programme de navigation

(30) Priority: 31.05.2007 JP 2007146261; 13.03.2008 JP 2008063700
(43) Date of publication of application: 03.12.2008
(73) Proprietor: Aisin AW Co., Ltd., Fujii-cho Anjo-shi, Aichi 444-1192 (JP)
(72) Inventor: Miyajima, Takayuki, Okazaki-shi Aichi 444-8564 (JP); Adachi, Kazuhide, Okazaki-shi Aichi 444-8564 (JP)
(74) Representative: Kramer Barske Schmidtchen Patentanwälte PartG mbB

(56) References cited:
- EP-A1- 1 669 720
- JP-A- 2000 221 051
- US-A- 5 774 071

## Description

### 1. Field of the Invention

The present invention relates to a navigation device, a navigation method, and a navigation program that perform route guidance by transmitting vibrations to a driver. 2. Description of the Related Art

Art that uses vibrations to perform various guidance when route guidance is performed by a navigation device or the like is known (see Japanese Patent Application Publication No. JP-A-2000-221051 for an example).

Related art does not give consideration to cases where a set route involves making successive right and left turns at intersections over a short distance. Namely, in related art, with respect to successive intersections, guidance regarding whether to turn right or left at the second and subsequent intersections is not given until after passing through the first intersection. As a consequence, the driver cannot prepare a driving operation prepare in advance for the second and subsequent intersections. Thus, the driver is forced to perform the driving operation with respect to the second intersection in a hurried manner.

JP 2000210051 A relates to an annunciator for navigation systems to surely announce a guide direction in an intersection, in particular to surely inform a person who has difficulty in hearing of the guide direction in the intersection, even when a route guide is missed in seeing or in hearing in the case where a travelling route of an automobile for moving to a destination is route- guided by a travelling route displayed on a display by a navigation system.

EP 1669720 A1 relates to a navigation apparatus including guiding units such as a voice output unit that outputs guidance voice, and a vibrator that notifies guidance contents by vibration.

US 5,774,071 relates to an on-board vehicle navigation apparatus having the function of giving oral instructions regarding the direction to turn when a vehicle approaches an intersection, wherein series of intersections which are very close to each other are grouped in order to provide specific instructions when the car reaches a position at a predetermined distance from the first intersection of the group.

The present invention was devised in light of the foregoing problem, and it is an object of the present invention to provide art capable of guiding a driver in advance using a vibration mode of a vibrator with respect to a driving operation for curves existing in succession in front of a host vehicle.

In order to achieve the above object, according to the present invention, there is provided a navigation device as set forth in claim 1 and a navigation method as set forth in claim 6. Accordingly, information indicating a form of a number of N successive curves (where, N is an integer of 2 or more) in front of a host vehicle position on a route is obtained. When the host vehicle reaches a predetermined position from the closest curve, a vibrator provided at a position where contact with the driver of the host vehicle is possible is excited in a vibration mode corresponding to the form of the N curves. According to this structure, the driver can recognize that there is a plurality of successive curves in front of the host vehicle before encountering the plurality of curves. In addition, the driver can intuit a curve form based on the vibration mode. As a consequence, based on the curve form, the driver can intuit a driving operation to be performed when traveling through the curve.

Various structures may be employed for a route information obtaining unit, provided that the route information obtaining unit is capable of obtaining information indicating a route of the host vehicle. The information indicating the route of the host vehicle may be information indicating a recommended route obtained as a result of a route search, provided that such information indicates a route on which the host vehicle is highly likely to travel. Information indicating a planned travel route manually set by the driver may be used, as well as information indicating an estimated route obtained by learning processing based on a past traveled route. A road determined by the navigation device as the road being followed may also be used as information indicating the route of the host vehicle.

Various structures may be employed for a host vehicle position information obtaining unit, provided that the host vehicle position information obtaining unit is capable of obtaining information indicating a position of the host vehicle. For example, by using a signal from a GPS satellite and signals from various sensors and cameras as well as map information, the host vehicle position can be corrected and identified based on a trajectory on a map. Such host vehicle position information may also be obtained by vehicle-to-vehicle communication or road-to-vehicle communication.

A curve information obtaining unit obtains information indicating the form of a number of N successive curves (where, N is an integer of 2 or higher) in front of the host vehicle position on a route. A curve refers to a location where the direction of the road and the travel direction of the host vehicle are not straight, such as a curve or comer following the road, or an intersection where a right turn or a left turn is set as part of the route, for example. An N number of successive curves refers to N curves where respective distances between adjacent curves in the order they are passed along a route is equal to or less than a preset distance. Note that the distance between curves may be calculated using a curve end portion and a curve middle portion as origin points, or calculated using reference positions preset for each curve as origin points. The curve information obtaining unit determines whether a plurality of successive curves are present in front of the host vehicle position using the route obtained by the route information obtaining unit and the host vehicle position obtained by the host vehicle position information obtaining unit, and obtains information indicating the curve forms if curves are present. The curve form includes a distance between curves and the host vehicle, the number of successive curves, a distance between curves, and a direction in which each curve bends. A degree to which each curve bends or the like may also be included.

A vibrator control unit is not limited provided that the vibrator control unit corresponds a vibrating mode of the vibrator with the form of the plurality of curves obtained by the curve information obtaining unit, and excites the vibrator. The vibrator control unit targets for control one or more vibrators provided at a position allowing contact with the driver of the host vehicle. Various vibration modes may be employed provided that the vibration mode generated enables the driver to instinctually grasp the form of the curve or can be associated through learning with the form of the curve.

For example, the vibrator control unit generates a vibration corresponding to an Mth (where, M is an integer equal to or greater than 1 and equal to or less than N-1) curve near the host vehicle position on the route before generating a vibration corresponding to an M+1th curve. Namely, vibrations corresponding to each curve are not generated at the same time; instead, the timings at which the vibrations are generated are staggered. Thus, using the host vehicle position as a reference, vibrations corresponding to curves present ahead are generated in order. According to this structure, by using the host vehicle position on the route as a reference, the driver can instinctually associate the curve corresponding to M+1th felt vibration as being farther away than the curve corresponding to the Mth felt vibration.

The vibrator control unit may lengthen an interval between a vibration corresponding to the Mth curve and a vibration corresponding to the M+1th curve in accordance with a longer distance between the Mth curve and the M+1th curve. Namely, an interval at which the vibration is generated corresponds to a distance between successive curves. According to this structure, the driver can instinctually intuit the length of the distance between curves.

The vibrator control unit may also generate a vibration corresponding to the Mth curve that is a stronger vibration than a vibration corresponding to the M+1th curve. Namely, using the host vehicle on the route as a reference, vibrations corresponding to curves at positions closer to the host vehicle are stronger, while vibrations corresponding to curves at positions farther away are weaker. According to this structure, the driver can instinctually associate that the curve corresponding to the strong vibration is closer to the host vehicle on the route than the curve corresponding to the weak vibration. Note that a strong vibration refers to a vibration with a large frequency or a vibration with a large amplitude.

The vibrator control unit may perform guidance for the Mth curve by generating a preset unit of vibration M times. According to this structure, the driver can easily associate that a unit of vibration generated M times corresponds to the Mth curve from the host vehicle position. It should be noted that for the unit of vibration, the vibration mode is not limited provided that it is a vibration within a preset unit of time. In other words, provided that a specific vibration is generated within a specific period and is countable, the vibration may be continuous or discrete.

The vibrator control unit may excite a vibrator provided on a right side of the driver when performing guidance for a right turn at the curve, and excite a vibrator provided on a left side of the driver when performing guidance for a left turn at the curve. According to this structure, the driver can instinctually associate the vibration felt from a vibrator provided on the right side with a curve where a right turn is required and the vibration felt from a vibrator provided on the left side with a curve where a left turn is required.

The vibrator control unit may select N vibrators corresponding to positions of N curves with respect to the host vehicle position and excite the selected vibrators. For example, vibrators provided at positions closer to the driver's head when seated in the driver seat may correspond to curves closer to the host vehicle position, while vibrators provided at positions closer to the anterior thigh regions of the driver may correspond to curves farther away from the host vehicle position. In such case, the driver can recognize that the vibrating of a vibrator close to his or her head corresponds to a curve close to the host vehicle position. Note that, provided that the positions of the N curves with respect to the host vehicle position are corresponded to the positions of the vibrators with respect to a reference position of a seat in which the driver is sitting, the quantity and layout of the vibrators, and how the positions correspond are not particularly limited.

The present invention may also be applied as a program or method, wherein information indicating a form of a number of N successive curves (where, N is an integer of 2 or more) in front of a host vehicle position on a route is obtained; and when the host vehicle reaches a predetermined position from the closest curve, a vibrator provided at a position where contact with the driver of the host vehicle is possible is excited in a vibration mode corresponding to the form of the N curves. The above-described navigation device, program, and method include various forms, and may be realized as an individual device, or realized through parts used in common with respective components provided in the vehicle. Furthermore, modifications can be made as appropriate such as using software for a portion or using hardware for a portion. The invention is also achieved as a recording medium of a program that controls the navigation device. The recording medium of such software may naturally be a magnetic recording medium or a magneto-optic recording medium, and the same holds for any recording medium developed in the future.

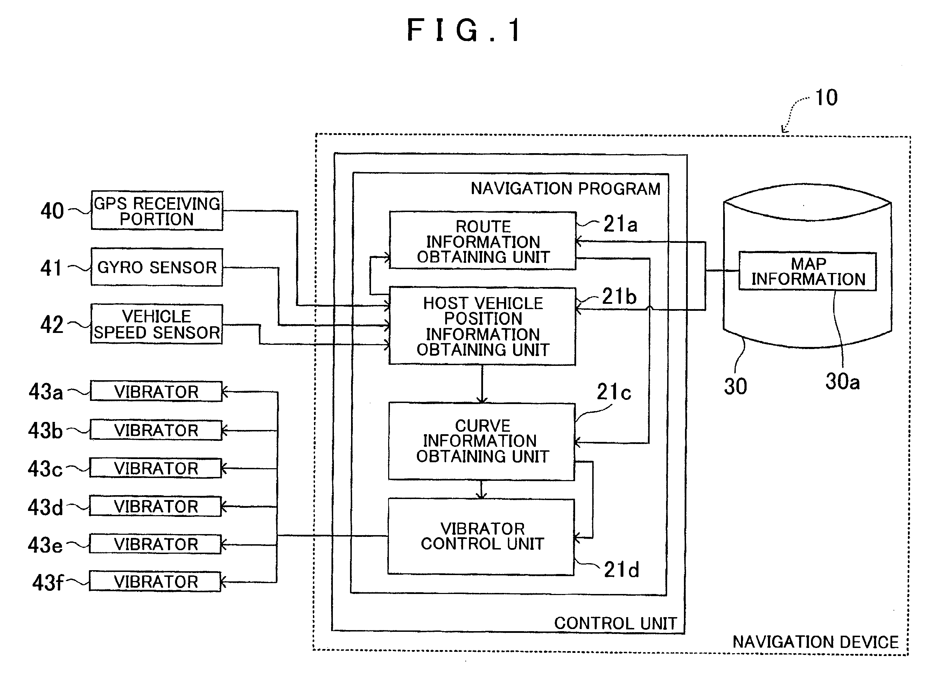

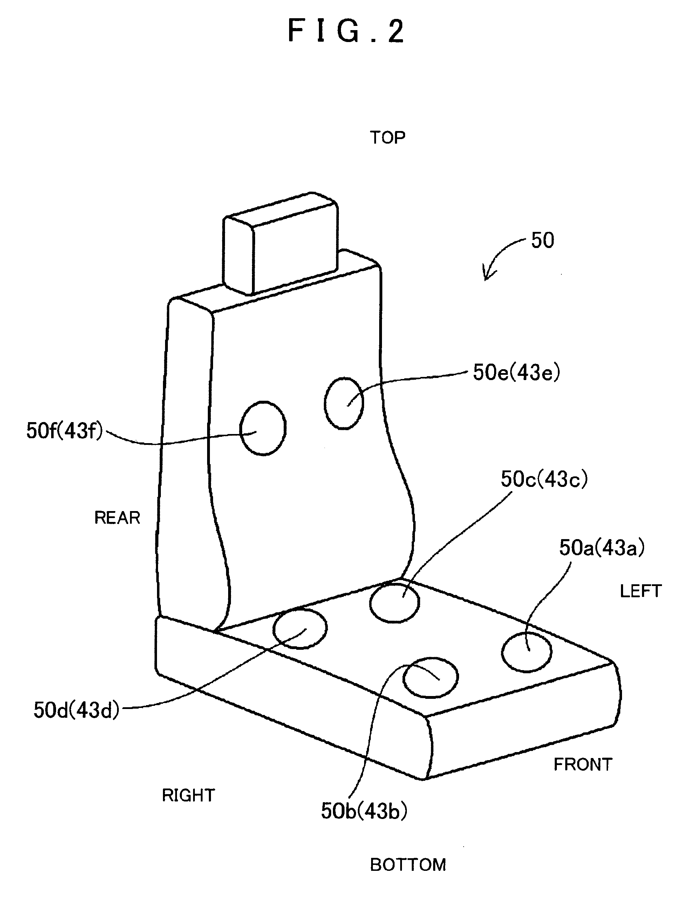

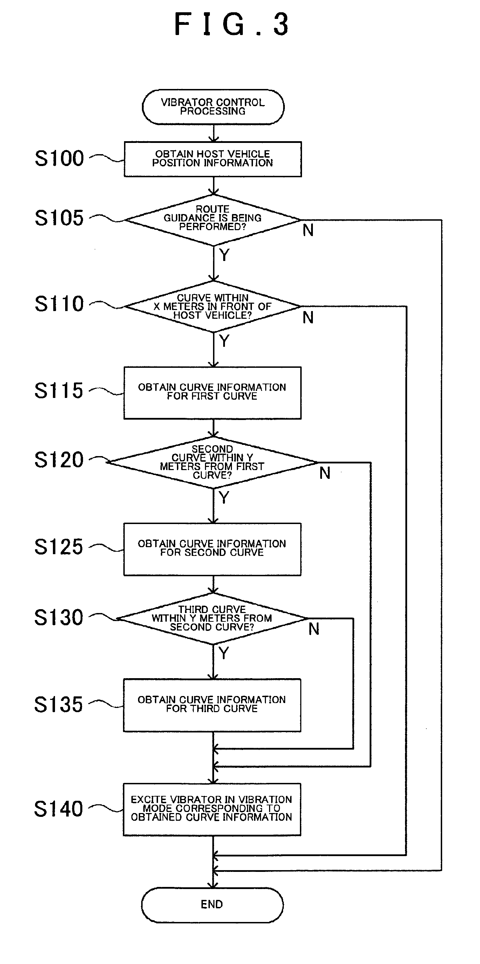

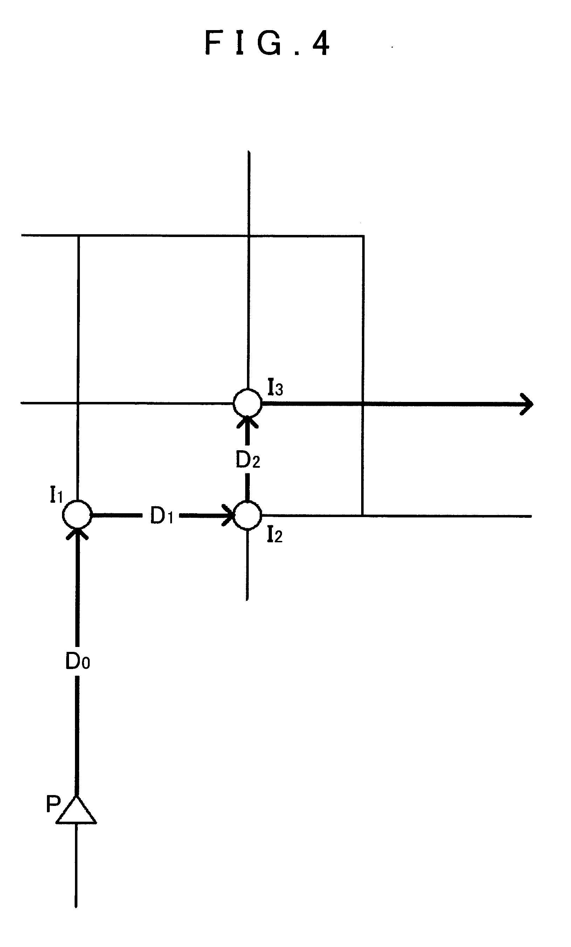

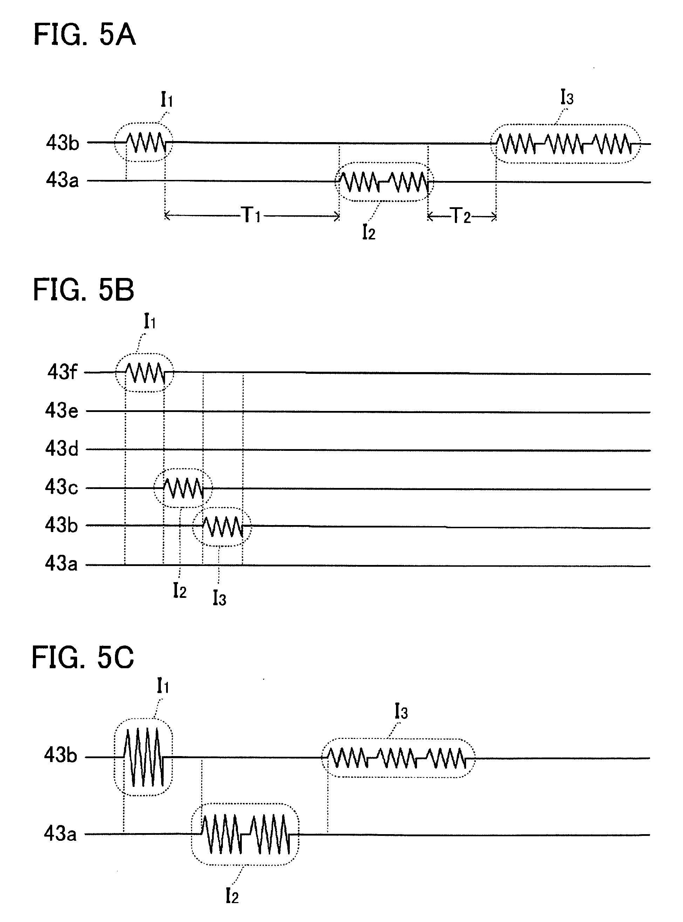

FIG 1 is a block diagram showing the structure of a navigation device installed in a vehicle; FIG. 2 is a schematic drawing showing a driver seat; FIG. 3 is a flowchart showing an example of processing performed by a navigation program; FIG. 4 is a drawing showing an example of an intersection model; and FIG. 5 shows drawings for explaining examples of vibration modes.

Hereinafter, embodiments of the present invention will be described in the following order. (1) Navigation Device Structure (2) Vibrator Control Processing (2-1) Vibration Mode Example 1 (2-2) Vibration Mode Example 2 (2-3) Vibration Mode Example 3 (3) Other Embodiments

### (1) Navigation Device Structure

FIG. 1 is a block diagram showing the structure of a navigation device 10 according to the present invention. The navigation device 10 includes a control unit 20, which is a computer equipped with a CPU, a RAM, a ROM, and the like, and a memory medium 30. A navigation program 21 stored in the memory medium 30 and the ROM is capable of execution by the control unit 20.

A host vehicle (a vehicle installed with the navigation device 10) is provided with a GPS receiving portion 40, a gyro sensor 41, a vehicle speed sensor 42, and vibrators 43a to 43f in order to realize a function for controlling the vibration of the vibrators by the navigation program 21. A function that controls the vibrators to perform route guidance is realized by these portions and the navigation program 21 working in cooperation.

The GPS receiving portion 40 receives radio waves from a GPS satellite and outputs information for calculating a current position of the vehicle via an interface (not shown). The control unit 20 receives a signal therefrom to obtain the current position of the vehicle. The gyro sensor 41 outputs a signal that corresponds to an angular velocity of the vehicle. The control unit 20 obtains this signal via an interface (not shown) to obtain information that indicates a direction in which the vehicle is moving. The vehicle speed sensor 42 outputs a signal that corresponds to a rotational speed of a wheel provided in the vehicle. The control unit 20 obtains this signal via an interface (not shown) to obtain information on the speed of the vehicle.

The vibrators 43a to 43f are vibrators (such as an eccentric motor or the like) that obtain a control signal output by the control unit 20 via an interface (not shown) and are capable of vibrating at a frequency or amplitude of a plurality of patterns as specified by the control signal. The vibrators 43a to 43f are provided at positions where contact with the driver is possible. In the present embodiment, the vibrators 43a to 43f are provided in a seat and capable of contacting the driver when the driver has assumed a driving posture. FIG. 2 is a schematic drawing showing a driver seat 50 according to the present embodiment, and the same FIG. 2 indicates positions where the vibrators are incorporated by circles. More specifically, in the present embodiment, the vibrators 43a to 43f are incorporated with right and left regions 50a, 50b at a front portion of the seat, right and left regions 50c, 50d at a rear portion of the seat, and right and left portions 50e, 50f at an upper portion of the seat back.

Thus in the present embodiment, the vibrators are provided at positions allowing contact with the right and left anterior thigh regions of the driver, positions allowing contact with the right and left posterior thigh regions of the driver, and positions allowing contact with the right and left shoulders of the driver. Note that since the driver sits in the middle of the seat, the vibrators 43a, 43b provided at the regions 50a, 50b are thus provided at generally symmetrical positions with respect to the center of the driver's body, with the vibrator 43a positioned on the left side as viewed from the center of the driver's body and the vibrator 43b positioned on the right side as viewed from the center of the driver's body. Similarly, the vibrators 43c, 43d provided at the regions 50c, 50d are provided at generally symmetrical positions with respect to the center of the driver's body, with the vibrator 43c positioned on the left side as viewed from the center of the driver's body and the vibrator 43d positioned on the right side as viewed from the center of the driver's body. Similarly, the vibrators 43e, 43f provided at the regions 50e, 50f are provided at generally symmetrical positions with respect to the center of the driver's body, with the vibrator 43e positioned on the left side as viewed from the center of the driver's body and the vibrator 43f positioned on the right side as viewed from the center of the driver's body.

According to the present embodiment, in order to perform route guidance by working in cooperation with the above-mentioned portions and exciting the vibrators, the navigation program 21 includes a route information obtaining unit 21a, a host vehicle position information obtaining unit 21b, a curve information obtaining unit 21c, and a vibrator control unit 21d. In addition, the memory medium 30 stores map information 30a for carrying out a route guidance function through the navigation program 21. The map information 30a includes node data indicating nodes set on roads, link data indicating connections between nodes, and data indicating landmark objects. The map information 30a is used for identifying the position of the host vehicle, performing guidance to a destination, and the like. The positions of road curve points, corner points, and intersections are stored as node data.

The route information obtaining unit 21a is a module that, based on the map information 30a and information indicating the position of the host vehicle (hereinafter referred to as "host vehicle position information"), obtains a recommended route from a position of the host vehicle to a destination by performing a search, and outputs information indicating a route for the host vehicle (hereinafter referred to as "route information"). The route information, for examples, includes node data indicating nodes set to intersections or the like on roads and link data indicating connections between nodes. It should be noted that if a destination is not set, then a road determined as the road being followed may be used as the route of the host vehicle.

The host vehicle position information obtaining unit 21b is a module that identifies host vehicle position information and outputs the host vehicle position information. Position information is obtained from a signal output by the GPS receiving portion 40, a signal output by the gyro sensor 41, and a signal output by the vehicle speed sensor 42, and the host vehicle position information obtaining unit 21b corrects such information based upon a trajectory on a map employing the map information 30a and identifies the position of the host vehicle. Such position information may also be obtained by vehicle-to-vehicle communication or road-to-vehicle communication.

The curve information obtaining unit 21c is a module that obtains information indicating the form of a number of N successive curves (where, N is an integer of 2 or higher) in front of the host vehicle position on a route. In this specification, a curve refers to a location where the direction of the road and the travel direction of the host vehicle are not straight, such as a curve or comer following the road, or an intersection where a right turn or a left turn is set as part of the route, for example. A number of N successive curves refers to N curves where respective distances between adjacent curves in the order they are passed along a route is equal to or less than a preset distance. Note that the distance between curves may be calculated using a curve end portion and a curve middle portion as origin points, or calculated using reference positions preset for each curve as origin points. The curve information obtaining unit 21c determines whether a plurality of successive curves are present in front of the host vehicle position using the route information and the host vehicle position information, and obtains information indicating the curve forms if curves are present. It should be noted that the curve form includes a distance between curves and the host vehicle, the number of successive curves, a distance between curves, and a direction in which each curve bends (a turning direction at each curve). A degree to which each curve bends or the like may also be included.

The vibrator control unit 2 d is a module that corresponds the vibrating mode of the vibrator with the form of the plurality of curves obtained by the curve information obtaining unit 21c, and outputs a signal for exciting the vibrator. The vibrator control unit 2 d targets for control one or more vibrators provided at a position allowing contact with the driver of the host vehicle. The vibration mode may be freely set provided that the vibration mode generated enables the driver to instinctually grasp the form of the curve or can be associated through learning with the form of the curve.

The above description involved the structure of the navigation device 10.

### (2) Vibrator Control Processing

Next, vibrator control processing executed by the navigation device 10 having the above-described structure will be explained. When the navigation program 21 is executed by the navigation device 10, the route information obtaining unit 21a, the host vehicle position information obtaining unit 21b, the curve information obtaining unit 21c, and the vibrator control unit 21d perform the processing shown in FIG. 3. The vibrator control processing is repeatedly executed at a predetermined time interval. Before the vibrator control processing is executed, the route information obtaining unit 21a obtains the route information.

First, the host vehicle position information obtaining unit 21b obtains the host vehicle position information (step S100). More specifically, position information is obtained from a signal output by the GPS receiving portion 40, a signal output by the gyro sensor 41, and a signal output by the vehicle speed sensor 42, and the host vehicle position information obtaining unit 21b corrects such information based upon a trajectory on a map employing the map information 30a and identifies the position of the host vehicle.

Next, the route information obtaining unit 21a determines whether route guidance is being performed (step S105). In the present embodiment, the destination is set by a user, and it is determined whether route guidance to the destination is being performed. If route guidance is not being performed, then the vibrator control processing is ended. Next, the curve information obtaining unit 21c determines whether a curve exists within X meters in front of the host vehicle on the route (step S110). More specifically, it is determined whether there is a curve within 500 meters, for example.

If there is a curve within X meters, then the curve information obtaining unit 21c obtains curve information for a first curve that is closest when viewed from the host vehicle position (step S115). More specifically, information is obtained that indicates a distance from the host vehicle position to the first curve and a turning direction of the host vehicle at the first curve (e.g. right turning or left turning), for example. If it is determined at step S110 that no curve exists within X meters, then the vibrator control processing is ended.

Next, the curve information obtaining unit 21c determines whether a second curve exists within Y meters of the first curve (step S120). More specifically, it is determined whether the next curve is within 200 meters in front of the first curve on the route, for example. If there is a second curve, then the curve information obtaining unit 21c obtains curve information for the second curve (step S125). More specifically, information is obtained that indicates a distance from the first curve to the second curve and a turning direction of the host vehicle at the second curve, for example. If it is determined that no second curve exists, then the processing moves to step S140.

Next, the curve information obtaining unit 21c determines whether a third curve exists within Y meters of the second curve (step S130). More specifically, it is determined whether the next curve is within 200 meters of the second curve on the route, for example. If there is a third curve, then the curve information obtaining unit 21c obtains curve information for the third curve (step S135). More specifically, information is obtained that indicates a distance from the second curve to the third curve and a turning direction of the host vehicle at the third curve, for example. If it is determined that no third curve exists, then the processing moves to step S140. Lastly, the vibrator control unit 21d excites the vibrator in a vibration mode corresponding to the obtained curve information (step S140).

The vibrator control processing is repeatedly executed at a predetermined time interval, and therefore the host vehicle position is updated at the predetermined time interval. According to the present embodiment, if there are two or more successive intersections at which the route guidance requires a right or left turn and the distance between adjacent intersections in the order they are passed along the route is within 200 meters, and when a first upcoming intersection among the successive intersections is within 500 meters of the host vehicle, then the vibrator is controlled in the vibration mode set at step S140. Note that such guidance through vibrating according to the vibration mode set at step S140 may be repeatedly executed until the first intersection is passed through, or executed only once before passing through the first intersection.

The above description involved the flow of the vibrator control processing shown in FIG. 3. Next, the vibration mode of the vibrator excited at step S140 when the above processing is executed will be described. FIG. 4 is a drawing for explaining an example of operation according to the vibrator control processing, and illustrates a route of the host vehicle. In front of a host vehicle position P along the route, there is a first intersection I₁, at a distance D₀ ahead, which is an intersection at which a right turn is required, and there is a second intersection I₂ at a distance D₁ from the intersection I₁, which is an intersection at which a left turn is required. There is also a third intersection I₃ at a distance D₂ from the intersection I₂, which is an intersection at which a right turn is required. In the vibration examples described below, the distance D₀ is 500 meters, the distance D₁ is 200 meters, and the distance D₂ is 150 meters.

### (2-1) Vibration Mode Example 1

FIG. 5A is a drawing showing an example of a vibration mode in the case where route guidance is performed as described above. The horizontal axis indicates a time line. The upper side shows a vibration timing for the vibrator 43b on the right side of the seat front portion, and the lower side shows a vibration timing for the vibrator 43a on the left side of the seat front portion. Turning right at the intersections I₁, I₃ is transmitted to the driver sitting in the driver seat by the vibration of the right-side vibrator, and turning left at the intersection I₂ is transmitted by the vibration of the left-side vibrator. Thus, when the driver feels the vibration of the vibrator provided on the right side he or she can instinctively associate such vibration with turning right, and when the driver feels the vibration of the vibrator provided on the left side he or she can instinctively associate such vibration with turning left.

Also, the timings at which vibrations are generated are staggered instead of the vibrations corresponding to each curve being generated at the same time, with the host vehicle position used as a reference and the vibrations generated in order starting with the vibration corresponding to the closest intersection. Thus, using the host vehicle position as a reference, the driver can instinctually associate the intersection corresponding to the second felt vibration as being farther away than the intersection corresponding to the first felt vibration along the route. Moreover, the intersection corresponding to the third felt vibration can be associated with being even farther away.

In addition, an interval (a time T₁) between the vibration corresponding to the intersection I₁ and the vibration corresponding to the intersection I₂, as well as an interval (a time T₂) between the vibration corresponding to the intersection T₂ and the vibration corresponding to the intersection T₃, can be respectively corresponded to the distance D₁ and the distance D₂. Thus, the driver can instinctually associate the lengths of the distances between the curves. In order to indicate that the distance D₁ is longer than the distance D₂, the time T₁ at least is set longer than the time T₂.

Guidance for an Mth (where, M is an integer equal to or greater than 1 and equal to or less than N-1) curve near the host vehicle position can be performed by generating a preset unit of vibration M times. For example, the driver can easily associate a unit of vibration generated twice as being a vibration corresponding to the second intersection from the host vehicle position. It should be noted that for the unit of vibration, the vibration mode is not limited provided that it is a vibration within a preset unit of time. In other words, provided that a specific vibration is generated within a specific period and is countable, the vibration may be continuous or discrete. The number of vibrations and the level of vibration may also be arbitrarily set.

### (2-2) Vibration Mode Example 2

FIG. 5B is a drawing showing another example of a vibration mode. Descriptions that overlap with that in Vibration Mode Example 1 are omitted, and only features unique to Example 2 will be explained. FIG. 5B shows the vibration timing for six vibrators, namely, in order from top to bottom, the vibrator 43f on the right side of the seat back upper portion, the vibrator 43e on the left side of the seat back upper portion, the vibrator 43d on the right side of the seat rear portion, the vibrator 43c on the left side of the seat rear portion, the vibrator 43b on the right side of the seat front portion, and the vibrator 43a on the left side of the seat front portion.

As FIG 5B shows, using the host vehicle position as a reference, guidance for the first upcoming intersection I₁ (i.e., the intersection closest to the host vehicle) is performed by vibrating the vibrator 43f on the right side of the seat back upper portion; guidance for the second intersection I₂ is performed by vibrating the vibrator 43c on the left side of the seat rear portion; and guidance for the third intersection I₃ is performed by vibrating the vibrator 43b on the right side of the seat front portion. These assume a position of the driver seat (e.g. a headrest) at which contact with the driver's head is possible when the driver sits in the driver seat as a reference position, wherein the vibrators 43e, 43f provided closest to the reference position are corresponded with the first intersection, the vibrators 43c, 43d provided second closest to the reference position are corresponded with the second intersection, and the vibrators 43a, 43b provided third closest to the reference position are corresponded with the third intersection. Moreover, a vibrator on the right side vibrates in the case of a right turn, and a vibrator on the left side vibrates in the case of a left turn.

Thus, a vibrator provided closer to the driver's head when the driver sits in the driver seat corresponds to an intersection closer to the host vehicle position, while a vibrator provided farther from the driver's head corresponds to an intersection farther from the host vehicle position. As a consequence, the driver can recognize that the vibrating of a vibrator close to his or her head corresponds to an intersection close to the host vehicle position.

### (2-3) Vibration Mode Example 3

FIG. 5C is a drawing showing another example of a vibration mode. Descriptions that overlap with that in Vibration Mode Examples 1 and 2 are omitted, and only features unique to Example 3 will be explained. In Example 3, using the host vehicle on the route as a reference, vibrations corresponding to intersections at positions closer to the host vehicle are stronger, while vibrations corresponding to intersections at positions farther away are weaker. FIG. 5C shows that the vibration corresponding to the intersection I₁ is strongest, while the vibration corresponding to the intersection I₃ is weakest. Thus, the driver can instinctually associate that the intersection corresponding to the strong vibration is closer to the host vehicle on the route than the intersection corresponding to the weak vibration. Note that a strong vibration refers to a vibration with a large frequency or a vibration with a large amplitude, for example.

As explained above, according to the present embodiment, the driver can recognize that there is a plurality of successive intersections in front of the host vehicle before encountering the plurality of intersections. In addition, the driver can intuit an intersection model based on the vibration mode. As a consequence, based on the intersection model, the driver can intuit a driving operation to be performed when traveling through the intersection.

### (3) Other Embodiments

The above embodiment is merely one example for carrying out the present invention, and various other embodiments may be employed, providing that information is obtained that indicates a plurality of successive curve forms in front of a host vehicle position along a route, and vibration modes corresponding to the plurality of curve forms are used to vibrate a vibrator provided at a position where contact with the driver of the host vehicle is possible. For example, the method of selecting N vibrators corresponding to the positions of N curves with respect to the host vehicle position is not limited to the above Vibration Mode Example 2. Provided that the positions of the N curves with respect to the host vehicle position are corresponded to the positions of the vibrators with respect to a reference position of a seat in which the driver is sitting, the quantity and layout of the vibrators, and how the positions correspond are not particularly limited. Alternatively, vibrators provided closer to the driver's head may correspond to curves farther away from the host vehicle.

It should also be noted that in cases where separate vibrators respectively correspond to intersections as in Vibration Mode Example 2, the vibrators may be simultaneously excited instead of providing a time lag between the vibrations corresponding to the intersections. Regardless of whether a plurality of vibrators are simultaneously excited, separate vibrators are respectively vibrating. Therefore, the driver can still associate the order and distance to the intersection with the position of the excited vibrator.

Furthermore, in the above embodiment, a structure was described where a plurality of vibrators is used to perform route guidance. However, the number of vibrators used may be one. In such case, guidance may be performed for only N curves present ahead of the host vehicle on the route by repeating a unit of vibration M times in an order starting from an Mth unit of vibration, as in Vibration Mode Examples 1 and 3. In other words, the structure may omit guidance for information regarding whether to turn left or right.

Further note that in the above embodiment, a structure was described in which the vibrator was provided in the driver seat. However, the vibrator may be provided in the steering wheel, for example, wherein the right side of the steering wheel vibrates in the case of a right turn and the left side of the steering wheel vibrates in the case of a left turn, as shown in FIGS. 5A and 5B.

In addition, information indicating the route of the host vehicle is not limited to a recommended route obtained as a result of a search, as described in the above embodiment, provided that such information indicates a route on which the host vehicle is highly likely to travel. Information indicating a planned travel route manually set by the driver may be used, as well as information indicating an estimated route obtained by learning processing based on a past traveled route.

In the above embodiment, a structure was described in which guidance for up to a maximum of three successive intersections was performed in advance. However, the number of intersections for which guidance is performed in advance by vibration may be a maximum of two intersections, or four or more intersections.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A navigation device comprising:
a route information obtaining unit (2 1 a) configured for obtaining information indicating a route of a host vehicle;a host vehicle position information obtaining unit (21 b) configured for obtaining information indicating a position of the host vehicle; **characterized by** a curve information obtaining unit (21 c) configured for obtaining curve information indicating a form of a number of N successive curves (where, N is an integer of 2 or more) in front of the host vehicle position on the route wherein the form includes a distance between curves and the host vehicle, the number of successive curves, a distance between curves, and a direction in which each curve bends; anda vibrator control unit (21d) configured for exciting a vibrator (43) provided at a position (50) where contact with a driver of the host vehicle is possible in a vibration mode corresponding to the curve information when the host vehicle reaches a position at a predetermined distance from the curve closest to the host vehicle among the N successive curves, wherein the vibrator control unit (21d) generates a vibration (43) corresponding to an Mth (where, M is an integer equal to or greater than 1 and equal to or less than N-1) curve near the host vehicle position on the route before generating a vibration corresponding to an M+lth curve, which is farther away than the Mth curve, wherein the vibrator control unit (21 b) lengthens an interval between a vibration corresponding to the Mth curve and a vibration corresponding to the M+1th curve in accordance with a longer distance between the Mth curve and the M+lth curve.

2. The navigation device according to claim 1, whereinthe vibrator control unit (21d) generates a vibration (43) corresponding to the Mth curve that is a stronger vibration than a vibration corresponding to the M+lth curve, which is farther away than the Mth curve.

3. The navigation device according to claims 1 or 2, whereinthe vibrator control unit (21d) performs guidance for the Mth curve by generating a preset unit of vibration M times.

4. The navigation device according to any one of claims 1 to 3, wherein the vibrator control unit (21d) excites a vibrator (43b, d, f) provided on a right side of the driver when performing guidance for a right turn at the curve, and excites a vibrator (43a, c, e) provided on a left side of the driver when performing guidance for a left turn at the curve.

5. The navigation device according to any one of claims 1 to 4, whereinthe vibrator control unit (21d) selects N vibrators (43) corresponding to positions of the N curves with respect to the host vehicle position and excites the selected vibrators.

6. A navigation method comprising:
obtaining information indicating a route of a host vehicle;
obtaining (S 100) information indicating a position of the host vehicle; **characterized by**
obtaining curve information indicating a form of a number of N successive curves (where, N is an integer of 2 or more) in front of the host vehicle position on the route wherein the form includes a distance between curves and the host vehicle, the number of successive curves, a distance between curves and a direction in which each curve bends; and
exciting (S 104) a vibrator (43) provided at a position where contact with a driver of the host vehicle is possible in a vibration mode corresponding to the curve information when the host vehicle reaches a position at a predetermined distance from the curve closest to the host vehicle among the N successive curves, generating a vibration (43) corresponding to an Mth curve (where M is an integer equal to or greater than 1 and equal to or less than N-1) near the host vehicle position on the route before generating a vibration corresponding to the M+lth curve, which is farther away than the Mth curve, wherein the interval between a vibration corresponding to the Mth curve and a vibration corresponding to the M+lth curve is lengthened in accordance with a longer distance between the Mth curve and the M+ 1 th curve.

7. A navigation program product that when executed on a computer causes the computer to perform the steps of the method according to claim 6.

## Patentansprüche

1. Navigationsvorrichtung mit:
einer Routeninformationserlangungseinheit (21 a), die konfiguriert ist zum Erlangen von Information, die eine Route eines Hostfahrzeugs angibt; einer Hostfahrzeugpositionsinformationserlangungseinheit (21b), die konfiguriert ist zum Erlangen von Information, die eine Position des Hostfahrzeugs angibt; **gekennzeichnet durch** eine Kurveninformationserlangungseinheit (21 c), die konfiguriert ist zum Erlangen von Kurveninformation, die eine Form von N aufeinanderfolgenden Kurven (wobei N ganzzahlig und 2 oder größer ist) vor der Hostfahrzeugposition auf der Route angibt, wobei die Form eine Distanz zwischen Kurven und dem Hostfahrzeug, die Anzahl aufeinanderfolgender Kurven, eine Distanz zwischen den Kurven, und eine Richtung, in die sich jede Kurve krümmt, aufweist; und einer Vibrationssteuerungseinheit (21d), die konfiguriert ist zum Anregen eines Vibrators (43), der an einer Position (50) bereitgestellt ist, wo ein Kontakt mit einem Fahrer des Hostfahrzeugs möglich ist, in einem Vibrationsmodus, der der Kurveninformation entspricht, wenn das Hostfahrzeug eine Position erreicht, die eine vorbestimmte Distanz von der Kurve aufweist, die dem Hostfahrzeug am nächsten ist, von den N aufeinanderfolgenden Kurven, wobei die Vibratorsteuerungseinheit (21d) eine Vibration (43) erzeugt entsprechend einer M-ten (wobei M ganzzahlig, gleich oder größer als 1 und gleich oder kleiner als N-1 ist) Kurve nahe der Hostfahrzeugposition auf der Route, bevor eine Vibration entsprechend einer M+1-ten Kurve erzeugt wird, die weiter weg von der M-ten Kurve ist, wobei die Vibratorsteuerungseinheit (21b) ein Intervall verlängert zwischen einer Vibration, die der M-ten Kurve entspricht, und einer Vibration, die der M+1-ten Kurve entspricht, gemäß einer längeren Distanz zwischen der M-ten Kurve und der M+1-ten Kurve.

2. Navigationsvorrichtung nach Anspruch 1, bei der die Vibratorsteuerungseinheit (21d) eine Vibration (43) erzeugt entsprechend der M-ten Kurve, die eine stärkere Vibration ist, als eine Vibration, die der M+1-ten Kurve entspricht, die weiter weg von der M-ten Kurve ist.

3. Navigationsvorrichtung nach Anspruch 1 oder 2, bei der die Vibratorsteuerungseinheit (21d) eine Führung für die M-te Kurve durchführt durch M-maliges Erzeugen einer voreingestellten Vibrationseinheit.

4. Navigationsvorrichtung nach einem der Ansprüche 1 bis 3, bei der die Vibratorsteuerungseinheit (21d) einen Vibrator (43b, d, f) anregt, der auf einer rechten Seite des Fahrers bereitgestellt ist, wenn eine Führung für eine Rechtskurve an einer Kurve durchgeführt wird, und einen Vibrator (43a, c, e) anregt, der auf einer linken Seite des Fahrers bereitgestellt ist, wenn eine Führung für eine Linkskurve an der Kurve durchgeführt wird.

5. Navigationsvorrichtung nach einem der Ansprüche 1 bis 4, bei der die Vibratorsteuerungseinheit (21d) N Vibratoren (43) auswählt entsprechend der Positionen der N-Kurven bezüglich der Hostfahrzeugsposition, und die ausgewählten Vibratoren anregt.

6. Navigationsverfahren mit:
Erlangen von Information, die eine Route eines Hostfahrzeugs angibt;
Erlangen (S 100) von Information, die eine Position des Hostfahrzeugs angibt, **gekennzeichnet durch**
Erlangen von Kurveninformation, die eine Form von N aufeinanderfolgenden Kurven (wobei N ganzzahlig und 2 oder größer ist) vor der Hostfahrzeugposition auf der Route angibt, wobei die Form eine Distanz zwischen den Kurven und dem Hostfahrzeug, die Anzahl von aufeinanderfolgenden Kurven, eine Distanz zwischen den Kurven und eine Richtung, in der sich jede Kurve krümmt, aufweist; und
Anregen (S 104) eines Vibrators (43), der an einer Position bereitgestellt ist, wo ein Kontakt mit einem Fahrer des Hostfahrzeugs möglich ist, in einem Vibrationsmodus, der der Kurveninformation entspricht, wenn das Hostfahrzeug eine Position erreicht, die eine vorbestimmte Distanz von der Kurve aufweist, die dem Hostfahrzeug am nächsten ist von den N aufeinanderfolgenden Kurven, eine Vibration (43) entsprechend einer M-ten Kurve erzeugt (wobei M ganzzahlig, gleich oder größer als 1 und gleich oder kleiner als N-1 ist) nahe der Hostfahrzeugposition auf der Route, bevor eine Vibration erzeugt wird, die der M+1-ten Kurve entspricht, die weiter weg von der M-ten Kurve ist, wobei das Intervall zwischen einer Vibration, die der M-ten Kurve entspricht, und einer Vibration, die der M+1-ten Kurve entspricht, verlängert wird gemäß einer längeren Distanz zwischen der M-ten Kurve und der M+1-ten Kurve.

7. Navigationsprogrammprodukt, das, wenn es auf einem Computer ausgeführt wird, den Computer veranlasst zum Durchführen der Schritte des Verfahrens gemäß Anspruch 6.

## Revendications

1. Un dispositif de navigation comprenant :
un module (21a) d'obtention d'information sur un itinéraire configuré pour obtenir des informations indiquant un itinéraire d'un véhicule hôte ;
un module (21b) d'obtention d'information sur la position du véhicule hôte configuré pour obtenir des informations indiquant une position du véhicule hôte ; **caractérisé par**
un module (21c) d'obtention d'information de courbe configuré pour obtenir des informations de courbe indiquant une forme faite d'un nombre de N courbes successives (où N est un entier de valeur 2 ou plus) devant la position du véhicule hôte sur l'itinéraire, la forme comprenant une distance entre les courbes et le véhicule hôte, le nombre de courbes successives, une distance entre les courbes et une direction dans laquelle chaque courbe s'incurve ;
et un module (21d) de contrôle de vibrateur configuré pour exciter un vibrateur (43) disposé à une position (50) où le contact avec un conducteur du véhicule hôte est possible selon un mode vibratoire correspondant à l'information de courbe quand le véhicule hôte atteint une position à une distance prédéterminée de la courbe la plus proche du véhicule hôte parmi les N courbes successives,
le module (21d) de contrôle de vibrateur générant une vibration (43) correspondant à une M^{ième} (où M est un entier supérieur ou égal à 1 et inférieur ou égal à N-1) courbe près de la position du véhicule hôte sur l'itinéraire avant de générer une vibration correspondant à une M+1^{ième} courbe, qui est plus loin que la M^{ième} courbe,
le module (21 b) de contrôle de vibrateur allongeant un intervalle entre une vibration correspondant à la M^{ième} courbe et une vibration correspondant à la M+1^{ième} courbe conformément à une distance plus grande entre la M^{ième} courbe et la M+1^{ième} courbe.

2. Le dispositif de navigation selon la revendication 1, dans lequel le module (21d) de contrôle de vibrateur génère une vibration (43) correspondant à la M^{ième} courbe qui est une vibration plus forte qu'une vibration correspondant à la M+ 1^{ième} courbe, qui est plus loin que la M^{ième} courbe.

3. Le dispositif de navigation selon la revendication 1 ou 2, dans lequel le module (21 d) de contrôle de vibrateur effectue un guidage pour la M^{ième} courbe en générant une unité prédéfinie de vibrations M fois.

4. Le dispositif de navigation selon l'une des revendications 1 à 3, dans lequel le module (21d) de contrôle de vibrateur excite un vibrateur (43b, d, f) disposé sur un côté droit du conducteur quand il effectue un guidage pour un tournant à droite sur la courbe, et excite un vibrateur (43a, c, e) disposé sur un côté gauche du conducteur quand il effectue un guidage pour un tournant à gauche sur la courbe.

5. Le dispositif de navigation selon l'une des revendications 1 à 4, dans lequel le module (21d) de contrôle de vibrateur sélectionne N vibrateurs (43) correspondant aux positions de N courbes par rapport à la position du véhicule hôte et excite les vibrateurs sélectionnés.

6. Une méthode de navigation comprenant :
l'obtention des informations indiquant un itinéraire d'un véhicule hôte ;
l'obtention des informations (S 100) indiquant une position du véhicule hôte ;
**caractérisé par**
l'obtention des informations de courbe indiquant une forme faite d'un nombre de N courbes successives (où N est un entier de valeur 2 ou plus) devant la position du véhicule hôte sur l'itinéraire, la forme comprenant une distance entre les courbes et le véhicule hôte, le nombre de courbes successives, et une direction dans laquelle chaque courbe s' incurve ; et
l'excitation (S104) d'un vibrateur (43) disposé à une position où le contact avec un conducteur du véhicule hôte est possible selon un mode vibratoire correspondant à l'information de courbe quand le véhicule hôte atteint une position à une distance prédéterminée de la courbe la plus proche du véhicule hôte parmi les N courbes successives, générant une vibration (43) correspondant à une M^{ième} courbe (où M est un entier supérieur ou égal à 1 et inférieur ou égal à N-1) près de la position du véhicule hôte sur l'itinéraire avant de générer une vibration correspondant à la M+1 ^{ième} courbe, qui est plus loin que la M^{ième} courbe, l'intervalle entre une vibration correspondant à la M^{ième} courbe et une vibration correspondant à la M+1^{ième} courbe étant allongé conformément à une distance plus grande entre la M^{ième} courbe et la M+1^{ième} courbe.

7. Un produit de programme de navigation qui lorsqu'il est exécuté sur un ordinateur fait que l'ordinateur exécute les étapes de la méthode selon la revendication 6.
